(19) Europäisches Patentamt
European Patent Office
Office européen des brevets

(11) **EP 3 555 166 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **17825195.5**

(22) Anmeldetag: **18.12.2017**

(51) Int Cl.:
*C08G 18/66* (2006.01)   *C08G 18/71* (2006.01)
*C08G 18/30* (2006.01)   *C08G 18/32* (2006.01)
*C08G 18/48* (2006.01)   *C08K 5/315* (2006.01)

(86) Internationale Anmeldenummer:
**PCT/EP2017/083346**

(87) Internationale Veröffentlichungsnummer:
**WO 2018/114820 (28.06.2018 Gazette 2018/26)**

(54) **VERFAHREN ZUR ERNIEDRIGUNG VON EMISSIONEN EINES POLYURETHANSCHAUMSTOFFES**

PROCESS FOR THE REDUCTION OF EMISSIONS IN POLYURETHANE FOAMS

PROCÉDÉ DE RÉDUCTION D'ÉMISSIONS D'UNE MOUSSE DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2016 EP 16204942**

(43) Veröffentlichungstag der Anmeldung:
**23.10.2019 Patentblatt 2019/43**

(73) Patentinhaber: **Covestro Intellectual Property GmbH & Co. KG**
**51373 Leverkusen (DE)**

(72) Erfinder:
• ALBACH, Rolf
  51061 Köln (DE)
• VENNER, Petra
  51375 Leverkusen (DE)
• LINDNER, Stefan
  42857 Remscheid (DE)

(74) Vertreter: **Levpat**
**c/o Covestro AG**
**Gebäude 4825**
**51365 Leverkusen (DE)**

(56) Entgegenhaltungen:
**EP-A2- 2 138 520   WO-A1-2015/082316**

**Beschreibung**

Es ist aus dem Stand der Technik bekannt, dass Polyurethanschaumstoffe Aldehyde emittieren können, wobei diese Aldehydemissionen im Allgemeinen unerwünscht sind. Nachgewiesen werden diese Emissionen z.B. bei Messungen nach der VDA 275 (Flaschenmethode, 3h 60°C) oder auch nach der VDA 276 (Emissionskammerprüfung, 65°C).

Sowohl EP2138520 als auch WO2015082316 beschreiben, dass bestimmte Cyanacetamide geeignet sein können, um die Emissionen von Formaldehyd aus Schaumstoffen zu reduzieren. WO2015082316 beschreibt darüber hinaus, dass bestimmte Ester der Cyanessigsäure und von 3Oxo-Carbonsäuren hierzu geeignet sein können.

Hydrazide wie Acethydrazid wurden ebenfalls als geeignete Additive zur Verringerung von Formaldehyden beschrieben (EP 1674515). Auch Polyhydrazodicarbonamide, die aus der Umsetzung von Hydrazin mit Isocyanaten hergestellt werden können, sind hierzu geeignet. Diese haben allerdings den Nachteil, als Partikel vorzuliegen und Schaumstoffe hart zu machen. Das ist bei Weichschaumstoffen nicht gewünscht. Das gleiche Problem erscheint bei der Nutzung von Polyharnstoffdispersionen, die ebenfalls geeignet sind, um Formaldehydemissionen aus Schaumstoffen zu reduzieren.

Aufgabe der vorliegenden Erfindung war die Bereitstellung von Polyurethanen, bevorzugt Polyurethanschaumstoffen, die eine noch geringere Formaldehydemission als Polyurethane, bzw. Polyurethanschaumstoffe des Standes der Technik aufweisen. Diese Aufgabe konnte mit folgendem Verfahren gelöst werden:

Gegenstand der vorliegenden Erfindung ist ein Verfahren zur Herstellung von Polyurethanen, bevorzugt Polyurethanschaumstoffen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.

Gegenstand der vorliegenden Erfindung sind auch die nach dem beschriebenen Verfahren erhältlichen Polyurethane, bzw. Polyurethanschaumstoffe.

Gegenstand der vorliegenden Erfindung ist insbesondere ein Verfahren zur Herstellung von Polyurethanen, bevorzugt Polyurethanschaumstoffen, bei dem

A1 gegenüber Isocyanaten reaktionsfähige Wasserstoffatome aufweisende Verbindungen mit einer OH-Zahl gemäß DIN 53240 von ≥ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 von ≥ 260 bis < 4000 mg KOH/g,

A3 Wasser und/oder physikalischen Treibmittel,

A4 ggf. Hilfs- und Zusatzstoffe wie

a) Katalysatoren,
b) oberflächenaktive Zusatzstoffe,
c) Pigmente und/oder Flammschutzmittel

A5 eine oder mehrere Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen, und

B Di- und/oder Polyisocyanate
miteinander umgesetzt werden.

Die Einsatzmenge der erfindungsgemäßen Komponente A5 bezogen auf 1 kg der Komponenten A1 und B beträgt 1 bis 100 g, bevorzugt 5 bis 50 g (Die Angabe 1 kg bezieht sich auf die Summe aus A1 und B).
Ganz besonders bevorzugt (Alternative I) ist ein Verfahren zur Herstellung von Polyurethanen, bevorzugt Polyurethanschaumstoffen bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis <260 mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen, und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Ebenfalls ganz besonders bevorzugt (Alternative II) ist ein Verfahren zur Herstellung von Polyurethanen, bevorzugt Polyurethanschaumstoffen bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

d) Katalysatoren,
e) oberflächenaktive Zusatzstoffe,
f) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_mY^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Es wurde gefunden, dass Verbindungen der Formeln (I), (III) und (IV) (Komponente A5) überraschenderweise besser als Aldehydfänger wirken als die bisher bekannten Verbindungen. Ein weiterer Gegenstand der Erfindung ist daher die Verwendung einer oder mehrerer Verbindungen der Formeln (I), (III) und (IV) in Polyurethanzusammensetzungen oder in Verfahren zur Herstellung von Polyurethanen, bevorzugt Polyurethanschaumstoffen, zur Erniedrigung der Formaldehydemission der daraus resultierenden Polyurethane, bzw. Polyurethanschaumstoffe.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Für die Herstellung der Schaumstoffe auf Isocyanatbasis können die nachfolgend näher beschriebenen Komponenten eingesetzt werden.

Komponente A1

Ausgangskomponenten gemäß Komponente A1 sind Verbindungen mit mindestens zwei gegenüber Isocyanaten reaktionsfähigen Wasserstoffatomen mit einer OH-Zahl gemäß DIN 53240 von $\geq$ 15 bis < 260 mg KOH/g, bevorzugt $\geq$ 20 bis $\leq$ 150 mg KOH/g, besonders bevorzugt $\geq$ 20 bis $\leq$ 50 mg KOH/g, ganz besonders bevorzugt $\geq$ 25 bis $\leq$ 40 mg

KOH/g. Hierunter fallen z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Mindestens zwei Hydroxylgruppen aufweisenden Polyether und Polyester sind erfindungsgemäß bevorzugt. Besonders bevorzugt sind mindestens zwei Hydroxylgruppen aufweisenden Polyether.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, $\alpha,\beta$- Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" sowie z.B. in US-A 1 922 451, US-A2 674 619, US-A 1 922 459, US-A 3 190 927 und US-A 3 346 557 beschrieben.

Die Polyaddition kann beispielsweise auch DMC-katalysiert erfolgen. DMC-Katalysatoren und deren Verwendung zur Herstellung von Polyetherpolyolen sind beispielsweise beschrieben in US 3 404 109, US 3 829 505, US 3 941 849, US 5 158 922, US 5 470 813, EP-A 700 949, EP-A 743 093, EP-A 761 708, WO-A 97/40086, WO-A 98/16310 und WO-A 00/47649.

In einer besonders bevorzugten Ausführungsform enthält Komponente A1 mindestens 30 Gew.-% mindestens eines Polyoxyalkylen-Polymers, bestehend aus einem Starter, Propylenoxid und ggf. Ethylenoxid und ggf. einem Endblock aus Ethylenoxid, wobei das Gesamtgewicht der Endblöcke im Mittel 3-20 Gew.-%, bevorzugt 5-15, besonders bevorzugt 6-10 Gew.-% bezogen auf das gesamte Gewicht aller Polyoxyalkylen-Polymere beträgt.

Neben den oben beschriebenen "einfachen" Polyetherpoyolen können auch Polyethercarbonatpolyole im erfindungsgemäßen Verfahren eingesetzt werden. Polyethercarbonatpolyole können z.B. durch katalytische Umsetzung von Ethylenoxid und Propylenoxid, ggf. weiteren Alkylenoxiden, und Kohlendioxid in Anwesenheit von H-funktionellen Startersubstanzen erhalten werden (siehe z.B. EP-A 2046861).

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Als Hydroxylgruppen-aufweisende Verbindungen der Komponente A1 können auch Polymerpolyole, PHD-Polyole und PIPA-Polyole in Komponente A1 eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol, hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4 und eine Hydroxylzahl von $\geq$ 3 mg KOH/g bis $\leq$ 112 mg KOH/g (zahlenmittleres Molekulargewicht 500 bis 18000) aufweist. PIPA-Polyole sind in GB 2 072 204 A, DE 31 03 757 A1 und US 4 374 209 A eingehend beschrieben.

### Komponente A2

Gegebenenfalls werden als Komponente A2 Verbindungen mit mindestens zwei gegenüber Isocyanaten reaktionsfähigen Wasserstoffatomen und einer OH-Zahl gemäß DIN 53240 von ≥ 260 bis < 4000 mg KOH/g, bevorzugt ≥ 400 bis ≤ 3000 mg KOH/g, besonders bevorzugt ≥ 1000 bis ≤ 2000 mg KOH/g eingesetzt.

Hierunter sind Hydroxylgruppen und gegebenenfalls Aminogruppen, Thiolgruppen oder Carboxylgruppen aufweisende Verbindungen zu verstehen, vorzugsweise Hydroxylgruppen und gegebenenfalls Aminogruppen aufweisende Verbindungen. Diese Verbindungen weisen bevorzugt 2 bis 8, besonders bevorzugt 2 bis 4, gegenüber Isocyanaten reaktionsfähige Wasserstoffatome auf. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), Tetraole (z.B. Pentaerythrit), Hexaole (z.B. Sorbit) oder Aminoalkohole (Ethanolamin, Diethanolamin, Triethanolamin) sein.

Es können aber auch kurzkettige Polyetherpolyole, Polyethercarbonatpolyole, Polyesterpolyole, Polyestercarbonatpolyole, Polythioetherpolyole, Polyacrylatpolyole oder Polycarbonatpolyole sein. Zur Herstellung dieser Polymere (Edukte, Verfahren) wird auf die Ausführungen zu Komponente A1 verwiesen.

Weitere Beispiele für Verbindungen gemäß Komponente A2 werden in EP-A 0 007 502, Seiten 16 - 17, beschrieben.

### Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

### Komponente A4

Als Komponente A4 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt a) Harnstoff, Derivate des Harnstoffs und/oder b) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

### Komponente A5

Komponente A5 umfasst Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.

In einer bevorzugten Variante stehen die Reste $R^1$, $R^4$, $R^5$, $R^6$, $R^7$ und $R^{12}$ jeweils unabhängig voneinander für H oder eine $C_1$-$C_6$ Alkylgruppe. In einer besonders bevorzugten Variante stehen die Reste $R^1$, $R^4$ und $R^5$ unabhängig voneinander für H, die Reste $R^6$, $R^7$ und $R^{12}$ unabhängig voneinander für H oder eine $C_1$-$C_6$ Alkylgruppe.

Von den Verbindungen (I), (III) und (IV) sind die Verbindungen (I) bevorzugt im erfindungsgemäßen Verfahren einzusetzen.

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

$$Q(NCO)n \qquad (V)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente B eine Diphenylmethandiisocyanat-Mischung eingesetzt, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführrungsform wird als Komponente B eine Diphenylmethandiisocyanat-Mischung eingesetzt, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiisocyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die PUR-Schaumstoffe können als Form- oder auch als Blockschaumstoffe hergestellt werden.

Die Formschaumstoffe können heiß- oder auch kalthärtend hergestellt werden.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen , und weisen Kennzahlen von 70 bis 130, bevorzugt 80 bis 120 und Raumgewichte von 4 bis 600 kg/m$^3$, bevorzugt 60 bis 120 kg/m$^3$ (Weichschaum) bzw. bevorzugt 15 bis 55 kg/m$^3$ (Halbhartschaum) auf.

Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (VI)$$

In einer ersten Ausführungsform betrifft die Erfindung ein Verfahren zur Herstellung von Polyurethanen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkyl-gruppe oder eine gegebenenfalls substituierte Arylgruppe,
- Y für ein ein- oder zweiwertiges Kation, und
- m für 1 oder 2 stehen.

In einer zweiten Ausführungsform betrifft die Erfindung ein Verfahren zur Herstellung von Polyurethanen, bevorzugt Polyurethanschaumstoffen, bei dem

A1 gegenüber Isocyanaten reaktionsfähige Wasserstoffatome aufweisende Verbindungen mit einer OH-Zahl gemäß DIN 53240 Datumvon $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 Datumvon $\geq$ 260 bis < 4000 mg KOH/g,

A3 Wasser und/oder physikalische Treibmittel,

A4 ggf. Hilfs- und Zusatzstoffe wie

a) Katalysatoren,

b) oberflächenaktive Zusatzstoffe,

c) Pigmente und/oder Flammschutzmittel

A5 eine oder mehrere Verbindungen ausgewählt aus der Gruppe bestehend aus:

$$NC\text{-}CHR^1\text{-}CON\ R^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,
  und

B Di- und/oder Polyisocyanate
miteinander umgesetzt werden.

In einer dritten Ausführungsform der Erfindung betrifft die Erfindung ein Verfahren gemäß Ausführungsform 1 oder 2, wobei
die Einsatzmenge der Verbindungen (I), (III) und (IV), bezogen auf 1 kg der gegenüber Isocyanaten reaktionsfähigen Wasserstoffatomen aufweisenden Verbindungen und der Di- und/oder Polyisocyanate 1 bis 100 g, bevorzugt 5 bis 50 g beträgt (Anspruch 1), bzw. die Einsatzmenge der Komponente A5, bezogen auf 1 kg der Komponenten A1 und B, 1 bis 100 g, bevorzugt 5 bis 50 g beträgt (Anspruch 2).
In einer vierten Ausführungsform der Erfindung betrifft die Erfindung ein Verfahren zur Herstellung von Polyurethanen, bevorzugt Polyurethanschaumstoffen gemäß Ausführungsform 2 oder 3 bei dem

A1 75 bis 99,0 Gew.-Teile (bezogen auf die Summe der Gew.-Teile der Komponenten A1 bis A4) gegenüber Isocyantanen reaktionsfähigen Wasserstoffatomen aufweisenden Verbindungen mit einer OH-Zahl gemäß DIN 53240 von $\geq$ 15 bis < 260 mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 1 bis 100 g pro kg der Komponenten A1 und B, bevorzugt 5 bis 50 g pro kg der Komponenten A1 und B einer oder mehrerer Verbindungen ausgewählt aus der Gruppe bestehend aus:

$$NC\text{-}CHR^1\text{-}CON\ R^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,

- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer fünften Ausführungsform der Erfindung betrifft die Erfindung ein Verfahren zur Herstellung von Polyurethanen, bevorzugt Polyurethanschaumstoffen gemäß Ausführungsform 2 oder 3 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 260 mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,
A3 0,5 bis 25 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$\text{NC-CHR}^1\text{-CONR}^{12}\text{-X} \qquad \text{(I)},$$

$$\text{NC-CHR}^4\text{-CO}_2\text{H} \qquad \text{(III)},$$

$$[\text{NC-CHR}^5\text{-CO}_2]_m\text{Y}^{m+} \qquad \text{(IV)},$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer sechsten Ausführungsform der Erfindung betrifft die Erfindung die Verwendung einer oder mehrerer Verbindungen ausgewählt aus der Gruppe bestehend aus:

$$\text{NC-CHR}^1\text{-CON R}^{12}\text{-X} \qquad \text{(I)},$$

$$\text{NC-CHR}^4\text{-CO}_2\text{H} \qquad \text{(III)},$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

in Polyurethanzusammensetzungen oder in Verfahren zur Herstellung von Polyurethanen, bevorzugt Polyurethanschaumstoffen, zur Erniedrigung der Formaldehydemission der daraus resultierenden Polyurethane, bzw. Polyurethanschaumstoffe.

In einer siebten Ausführungsform der Erfindung betrifft die Erfindung ein Verfahren oder eine Verwendung gemäß einer der Ausführungsformen 1 bis 6, wobei in den Verbindungen (I), (III) und (IV) $R^1$, $R^4$, $R^5$, $R^6$, $R^7$ und $R^{12}$ jeweils unabhängig voneinander für H oder eine $C_1$-$C_6$ Alkylgruppe stehen.

In einer achten Ausführungsform der Erfindung betrifft die Erfindung ein Verfahren oder eine Verwendung gemäß Ausführungsform 7, wobei $R^1$, $R^4$ und $R^5$ unabhängig voneinander für H stehen.

In einer neunten Ausführungsform der Erfindung betrifft die Erfindung ein Verfahren gemäß einer der Ausführungsformen 1 bis 5, 7 oder 8, wobei als gegenüber Isocyanaten reaktionsfähige Wasserstoffatome aufweisenden Verbindungen (Komponente A1) mindestens zwei Hydroxylgruppen aufweisenden Polyether, gegebenenfalls in Mischung mit mindestens zwei Hydroxylgruppen aufweisenden Polyestern eingesetzt werden.

In einer zehnten Ausführungsform der Erfindung betrifft die Erfindung ein Verfahren gemäß einer der Ausführungsformen 1 bis 5, 7 bis 9, wobei die Komponente, die aus gegenüber Isocyanaten reaktionsfähige Wasserstoffatome aufweisenden Verbindungen besteht (Komponente A1), mindestens 30 Gew.-% mindestens eines Polyoxyalkylen-Copolymers enthält, bestehend aus einem Starter, Propylenoxid und Ethylenoxid und einem Endblock aus Ethylenoxid, wobei das Gesamtgewicht der Endblöcke aus EO im Mittel 3 - 20 Gew.-%, bevorzugt 5-15, besonders bevorzugt 6 - 10 Gew.-% bezogen auf das gesamte Gewicht aller Polyoxyalkylen-Copolymere beträgt.

In einer elften Ausführungsform der Erfindung betrifft die Erfindung ein Verfahren gemäß einer der Ausführungsformen 1 bis 5 oder 7 bis 10, wobei als Di- und/oder Polyisocyanat-Komponente (Komponente B) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,
verwendet wird.

In einer zwölften Ausführungsform der Erfindung betrifft die Erfindung ein Verfahren gemäß einer der Ausführungsformen 1 bis 5 oder 7 bis 10, wobei als Di- und/oder Polyisocyanat-Komponente (Komponente B) eine Diphenylmethandiisocyanat-Mischung, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiiso-cyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,
verwendet wird.

In einer dreizhnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 260$ bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

-   X für $NR^6R^7$,
-   $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
-   Y für ein ein- oder zweiwertiges Kation, und
-   m für 1 oder 2 stehen,
    und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer vierzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H oder eine $C_1$-$C_6$ Alkylgruppe,
- Y für ein ein- oder zweiwertiges Kation, und
- m für 1 oder 2 stehen,
  und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer fünfzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 260$ bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$ und $R^5$ jeweils unabhängig voneinander für H und $R^6$, $R^7$ und $R^{12}$ jeweils unabhängig voneinander für H oder eine $C_1$-$C_6$ Alkylgruppe,
- Y für ein ein- oder zweiwertiges Kation, und
- m für 1 oder 2 stehen,
  und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer sechzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$\text{NC-CHR}^1\text{-CONR}^{12}\text{-X} \qquad \text{(I)},$$

$$\text{NC-CHR}^4\text{-CO}_2\text{H} \qquad \text{(III)},$$

$$[\text{NC-CHR}^5\text{-CO}_2]_m\text{Y}^{m+} \qquad \text{(IV)},$$

wobei

- X für $\text{NR}^6\text{R}^7$,
- $R^1$, $R^4$, $R^5$, $R^6$, $R^7$ und $R^{12}$ jeweils unabhängig voneinander für H oder eine $C_1$-$C_6$ Alkylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer siebzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,

b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H oder eine $C_1$-$C_6$ Alkylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer achtzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 260$ bis < 4000 mg KOH/g,
A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

- X für NR$^6$R$^7$,
- R$^1$, R$^4$ und R$^5$ jeweils unabhängig voneinander für H und R$^6$, R$^7$ und R$^{12}$ jeweils unabhängig voneinander für H oder eine C$_1$-C$_6$ Alkylgruppe,
- Y für ein ein- oder zweiwertiges Kation, und
- m für 1 oder 2 stehen, und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer neunzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für NR$^6$R$^7$,
- R$^1$, R$^4$ und R$^5$ jeweils unabhängig voneinander für H und R$^6$, R$^7$ und R$^{12}$ jeweils unabhängig voneinander für H oder eine C$_1$-C$_6$ Alkylgruppe,
- Y für ein ein- oder zweiwertiges Kation, und
- m für 1 oder 2 stehen, und

B Di- oder Polyisocyanaten,
miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer zwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 260$ bis $< 4000$ mg KOH/g,
A3 0,5 bis 25 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen, und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer einundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von

$\geq 260$ bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

-   X für $NR^6R^7$,
-   $R^1$, $R^4$, $R^5$, $R^6$, $R^7$ und $R^{12}$ jeweils unabhängig voneinander für H oder jeweils unabhängig voneinander für H oder eine $C_1$-$C_6$ Alkylgruppe,
-   Y für ein ein- oder zweiwertiges Kation, und
-   m für 1 oder 2 stehen,
    und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer zweiundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 260$ bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$ und $R^5$ jeweils unabhängig voneinander für H und $R^6$, $R^7$ und $R^{12}$ jeweils unabhängig voneinander für H oder eine $C_1$-$C_6$ Alkylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer dreiundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 20$ bis $\leq 150$ mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq 260$ bis $< 4000$ mg KOH/g,
A3 0,5 bis 25 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H oder jeweils unabhängig voneinander für H oder eine $C_1$-$C_6$ Alkylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und

b) 10 bis 55 Gew.-% 2,2'-Diphenylmethandiisocyanat und/oder 2,4'-Diphenylmethandiisocyanat und

c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer vierundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,

b) oberflächenaktive Zusatzstoffe,

c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$\text{NC-CHR}^1\text{-CONR}^{12}\text{-X} \qquad (I),$$

$$\text{NC-CHR}^4\text{-CO}_2\text{H} \qquad (III),$$

$$[\text{NC-CHR}^5\text{-CO}_2]_m\text{Y}^{m+} \qquad (IV),$$

wobei

- X für NR$^6$R$^7$,
- R$^1$, R$^4$, R$^5$, R$^6$, R$^7$ und R$^{12}$ jeweils unabhängig voneinander für H oder jeweils unabhängig voneinander für H oder eine C$_1$-C$_6$ Alkylgruppe,
- Y für ein ein- oder zweiwertiges Kation, und
- m für 1 oder 2 stehen,
  und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiisocyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer fünfundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$ und $R^5$ jeweils unabhängig voneinander für H und $R^6$, $R^7$ und $R^{12}$ jeweils unabhängig voneinander für H oder eine $C_1\text{-}C_6$ Alkylgruppe,
- Y für ein ein- oder zweiwertiges Kation, und
- m für 1 oder 2 stehen,
  und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer sechsundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$ und $R^5$ jeweils unabhängig voneinander für H und $R^6$, $R^7$ und $R^{12}$ jeweils unabhängig voneinander für H oder eine $C_1$-$C_6$ Alkylgruppe,
- Y für ein ein- oder zweiwertiges Kation, und
- m für 1 oder 2 stehen, und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer siebenundzwanzigsten Ausführungsform der Erfindung betrifft die Erfindung Polyurethane, bzw. Polyurethanschaumstoffe, erhältlich nach einem Verfahren gemäß einer der Ausführungsformen 1 bis 5 oder 7 bis 26.
In einer achtundzwanzigsten Ausführungsform der Erfindung betrifft die Erfindung Polyurethane, bzw. Polyurethanschaumstoffe gemäß Ausführungsform 27 mit einem Raumgewicht von 4 bis 600 kg/m$^3$ (Polyurethanweichschaum, bzw. Halbhartschaum), bevorzugt 60 bis 120 kg/m$^3$ (Polyurethanweichschaum), bzw. bevorzugt 15 bis 55 kg/m$^3$ (Halbhartschaum)
In einer neunundzwanzigsten Ausführungsform der Erfindung betrifft die Erfindung Polyurethane, bzw. Polyurethanschaumstoffe gemäß Ausführungsform 27 oder 28 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**Beispiele**

Prüfmethoden:

Die Stauchhärte, Dämpfung und die Rohdichte der Schaumstoffe wurden in Anlehnung an DIN EN ISO 3386-1 in Aufschäumrichtung bestimmt. Die Probenkörper hatten ein Volumen von 5*5*5 cm$^3$. Eine Vorkraft von 2 kPa wurde dabei eingestellt. Die Vorschubgeschwindigkeit betrug 50 mm/min.
Die Hydroxylzahl wurde gemäß DIN 53240 bestimmt.
Die Offenzelligkeit wurde mit einem Gasverdrängungspyknometer vom Typ AccuPyc 1330 gemessen.
Als Glasübergang wird das Maximum des tan $\delta$ nach DIN EN ISO 6721-2 B (Torsionspendel -Verfahren) angegeben.

Bestimmung der Aldehyd-Emissionen:

VDA 275 ist eine standardisierte Testmethode des Verbandes Deutscher Automobilhersteller (VDA). Sie wird hier in der zum Zeitpunkt der Anmeldung gültigen Fassung verwendet.

a) Messmethode 1 (Flaschenmethode nach VDA 275):

In eine Glasflasche von einem Liter Volumen werden 50 Milliliter Wasser gegeben. Am Deckel wird eine Schaumstoffplatte der Größe 40*10*2 cm$^3$ frei hängend befestigt so dass der Schaumstoff nicht mit der wäßrigen Lösung am Boden der Flasche in Kontakt ist. Die Flasche wird verschlossen und 3 Stunden in einen Umlufttrockenschrank bei 60 °C gelagert. Man läßt die Flasche auf Raumtemperatur abkühlen, entnimmt den Schaumstoff. Ein Aliquot der wässrigen Lösung wird mit einer Lösung von 0,3 mmol/Liter Dinitrophenylhydrazin (DNPH) in 3 mM phosphorsaurem Acetonitril umgesetzt. Man analysiert die Zusammensetzung der wäßrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Meßwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

b) Messmethode 2 (modifizierte Flaschenmethode):

In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 μmol pro Flasche. Am Deckel wird eine Schaumstoffplatte der Größe 40*10*4 cm$^3$ frei hängend befestigt so dass der Schaumstoff nicht mit der wäßrigen Lösung am Boden der Flasche in Kontakt ist. Die Flasche wird verschlossen und 3 Stunden in einen Umlufttrockenschrank bei 65 °C gelagert. Man läßt die Flasche auf Raumtemperatur abkühlen, entnimmt den Schaumstoff und analysiert die Zusammensetzung der wäßrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Meßwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

**Beschreibung der Versuche**

Die Herstellung der Polyurethanschaumstoffe erfolgt durch Mischen einer Polyolformulierung A und einer Isocyanatkomponente B.

Die angegebenen OH-Zahlen werden nach DIN 53240 in der zum Zeitpunkt der Anmeldung gültigen Fassung erhalten.

**Versuchsserie 1: Weichformschaum z. B. für Lärmabsorption**

Beschreibung der Rohstoffe

A1-1: Polyether-Gemisch aus einem Glyzerin-gestarteten Polyalkylenoxid mit einem Molgewicht von 4,8 kg/mol, einer OH-Zahl von 35 mg KOH/g, und einem Gehalt an Ethylenoxid von < 50 Gew.-% und einem Propylenglycol-gestarteten Polyalkylenoxid mit einem Molgewicht von 4 kg/mol und einer OH-Zahl von 28 mg KOH/g im Gewichtsverhältnis 55:45.

A2-1: Triethanolamin

A3-1: Wasser

A4-1: Schwarzpaste Isopur N, Handelsprodukt der Firma

A4-2: Schaumstabilisator Tegostab B8734 LF2, Handelsprodukt der Firma Evonik Nutrition & Care, Essen

A4-3: Als Zellöffner genutztes Glyzerin-gestartetes Polyalkylenoxid mit einer OH-Zahl von 37 mg KOH/g und einem Gehalt an Ethylenoxid von ≥ 50 Gew.-%

A4-4: Katalysator-Mischung aus Jeffcat® DPA (Handelsprodukt der Firma Huntsman) und Dabco® NE 300 (Handelsprodukt der Firma Air Products) im Verhältnis 6:1 (nach Gewicht)

A5-1: Cyanessigsäure 67%-ig in DEG (Diethylenglycol)

B-1: Gemisch aus MDI Isomeren und Homologen mit einer Dichte von 1,24 kg/l, einem Isocyanat-Gehalt von 323 g/kg und einer Viskosität von 0,05 Pa*s. Der Gehalt an 4,4'-MDI beträgt 55 Gew.-%. Die Summe aus 2,2'-MDI, 2,4'-MDI und 4,4'-MDI beträgt 70 Gew.-%.

Polyolformulierung A

|  | Vergleich | Erfindungsgemäß |
|---|---|---|
|  | 90V | 90A |
| Polyether-Gemisch (A1-1) | 91,7 | 87,8 |
| Zellöffner (A4-3) | 1,5 | 1,5 |
| Farbpaste (A4-1) | 0,2 | 0,2 |
| Schaumstabilisator (A4-2) | 0,8 | 0,7 |
| Vernetzer (A2-1) | 0,6 | 0,6 |
| Treibmittel (A3-1). | 3,8 | 3,7 |
| Katalysator (A4-4) | 1,4 | 2,6 |
| Cyanessigsäure 67%-ig in DEG (A5-1) | - | 2,9 |

Herstellung der Schaumstoffe:

Als Kennzahl wird das Hundertfache des Verhältnisses von Isocyanat-Gruppen zu Isocyanat-reaktiven Gruppen bezeichnet. In den folgenden Versuchen werden immer Schaumstoffe miteinander verglichen, die unter Verwendung der gleichen Kennzahl hergestellt wurden. Es wurde in zwei Versuchsreihen eine Kennzahl unter 100 (Überschuß an Isocyanat-reaktiven Gruppen) und eine Kennzahl über 100 eingestellt.

| Kennzahl 90 | Einsatzmenge Polyolkomponente Gramm | Einsatzmenge Isocyanat Gramm | Einsatzmenge Isocyanat Gramm |
|---|---|---|---|
| Schaumstoff 90V | 100 | 59 |  |
| Schaumstoff 90A | 100 |  | 61 |
| Kennzahl 105 | Einsatzmenge Polyolkomponente Gramm | Einsatzmenge Isocyanat Gramm | Einsatzmenge Isocyanat Gramm |
| Schaumstoff 105V | 100 | 69 |  |
| Schaumstoff 105A | 100 |  | 71 |

Zur Herstellung der Schaumstoffe wird die notwendige Menge an Polyol in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit Luft beladen. Das Isocyanat / Isocyanatgemisch / Prepolymer wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat wird der Polyolformulierung zugesetzt (Auslaufzeit: 3s). Die Mischung wird mit einem Rührwerk (Fa. Pendraulik) für 5 Sekunden intensiv vermischt. Zu Beginn der Vermischung wird eine Stoppuhr gestartet, von welcher die charakteristischen Reaktionszeiten abgelesen werden. Ca. 93 Gramm des Reaktionsgemisches werden in eine 23°C warme mit Teflonfolie ausgekleidete Kastenform aus Aluminium mit 1,6 dm$^3$ Volumen gegossen. Die Form wird verschlossen und verriegelt. Nach sechs Minuten wird die Verriegelung geöffnet, entspannt und der Formendruck wird über die Aufdrückhöhe des Formendeckels durch das Formteil [mm] qualitativ beurteilt. Das entformte Schaumkissen wird bezüglich Ausreaktion sowie Haut- und Porenstruktur qualitativ beurteilt.

Die Reaktionskinetik wird an dem Rest des Reaktionsgemisches im Becher bestimmt. Die Startzeit ist erreicht, wenn ein Expandieren des Gemisches zu beobachten ist. Die Abbindezeit ist erreicht, wenn man mit einem Holzsiedestäbchen durch Auftupfen auf die Oberfläche des aufsteigenden Schaumes Fäden ziehen kann. Alternativ bilden sich Klümpchen am Holzsiedestäbchen.

Die Steigzeit ist erreicht, wenn der Schaum endgültig aufhört zu expandieren. Hierbei ist darauf zu achten, dass einige Systeme dazu neigen ein Stück abzusacken und dann noch einmal weiter steigen.

| Reaktionskinetik |  | 90V | 90A | 105V |
|---|---|---|---|---|
|  |  | Vergleich | Erfindungsgemäß | Vergleich |
| Startzeit | Sekunden | 10 | 8 | 10 |
| Abbindezeit | Sekunden | 50 | 55 | 52 |

(fortgesetzt)

| Reaktionskinetik | | 90V Vergleich | 90A Erfindungsgemäß | 105V Vergleich |
|---|---|---|---|---|
| Steigzeit | Sekunden | 69 | 80 | 80 |

Konditionierung der Schaumstoffe:

Alle Schaumstoffe wurden nach der Herstellung 7 Tage in einem Abzug bei 20-23°C aufbewahrt. Ein Teil der Schaumstoffe wurden vor der Messung der Aldehydemissionen in Aluminiumfolie verpackt bei 90°C in einem Umluft-Trockenschrank gelagert. Diese Schaumstoffe werden als "gealtert" bezeichnet.

Mechanische Charakterisierung der Schaumstoffe

Die Stauchhärte wurde parallel zur Aufschäumrichtung bei 40% Stauchung gemessen. Eine Vorkraft von 2 kPa wurde dabei eingestellt. Die Vorschubgeschwindigkeit betrug 50 mm/min.

| Rohdichte | 90V Vergleich | 105V Vergleich | 90A Erfindung | |
|---|---|---|---|---|
| vor Alterung | 49 | 50 | 48 | $Kg/m^3$ |
| Nach 7 Tagen 110°C | 49 | 50 | 49 | $Kg/m^3$ |
| Stauchhärte bei 40% Stauchung | 90V Vergleich | 105 V Vergleich | 90A Erfindung | |
| vor Alterung | 8,4 | 11,7 | 8,7 | kPa |
| Nach 7 Tagen 110°C | 8,2 | 11,7 | 8,6 | kPa |
| Dämpfung bei 40% Stauchung | 90V | 105 V Vergleich | 90A Vergleich | Erfindung |
| vor Alterung | | 0,42 | 0,47 | 0,38 |
| Nach 7 Tagen 110°C | | 0,41 | 0,47 | 0,39 |

Aldehyd-Emissionen

Messmethode 1 (Flaschenmethode nach VDA 275)

| VDA275 | | 90 V Vergleich | 105V Vergleich | 90 A Erfindung |
|---|---|---|---|---|
| Formaldehyd | mg/kg | 4,2 | 3,6 | 3,8 |

Man findet den bekannten Effekt, dass eine Anhebung der Kennzahl die Aldehydemissionen reduziert. Die erfindungsgemäßen Schaumstoffe zeigen bei gleicher Kennzahl mäßig bis deutlich reduzierte Aldehydemissionen

Testmethode 2 (modifizierte Flaschenmethode)

| Formaldehyd | | 90 V Vergleich | 105V Vergleich | 90 A Erfindung |
|---|---|---|---|---|
| Vor Alterung | mg/kg | 7,0 | 6,1 | 5,3 |
| Nach 7 Tagen 90°C | mg/kg | 8,8 | 9,8 | 7,8 |

Die modifizierte Methode verstärkt die Sichtbarkeit von Formaldehyd. Überraschend führt die Alterung zu einer Umkehrung des zunächst positiven Effekts einer höheren Kennzahl.

Vor und nach Alterung hat der Zusatz von Cyanessigsäure einen positiven Effekt auf die Formaldehydemissionen.

**Versuchsserie 2: halbharter Blockschaum z. B. für Lärmabsorption**

(Abgrenzung zu EP 1674515)

Beschreibung der Rohstoffe

(A1/A2)-1: Polyether-Gemisch aus einem Glyzerin/Sorbitol-co-gestarteten Polyalkylenoxid mit einem Äquivalentgewicht von 1,8 kg/mol und einer OH-Zahl von 31 mg KOH/g, einem Glyzerin-gestarteten Polyalkylenoxid mit einem Äquivalentgewicht von 0,1 kg/mol und einer OH-Zahl von 560 mg KOH/g und einem Propylenglycol-gestarteten Polyalkylenoxid mit einem Äquivalentgewicht von 0,2 kg/mol und einer OH-Zahl von 280 mg KOH/g in einem Gewichtsverhältnis 38:50:12.
A2-2: Glyzerin
A3-1: Wasser
A4-5: Polyether-Polydimethylsilicon-Schaumstabilisator
A4-6: Katalysator: Umsetzungsprodukt aus Ölsäure und Dimethylaminopropylamin (1:1 molar) A5-2: Acethydrazid
A5-3: Cyanacethydrazid
A5-4: DHBH: Umsetzungsprodukt aus Hydrazinhydrat und cyclischem Propylencarbonat (1:2 molar)
A5-5: CMPA: 2-Cyano-N-methyl-N-phenylacetamid
A5-6: KCA: Kaliumcyanoacetat
B-2: Gemisch aus MDI Isomeren und Homologen mit einer Dichte von 1,22 kg/l, einem Isocyanat-Gehalt von 322 g/kg und einer Viskosität von 0,05 Pa*s. Der Gehalt an 4,4'-MDI beträgt 47 Gew.-%. Die Summe aus 2,2'-MDI, 2,4'-MDI und 4,4'-MDI beträgt 70%.

|  | Gewichts-% in der Polyolformulierung |
|---|---|
| Polyether-Gemisch (A1/A2)-1 | 82,0 |
| Polyether-Polydimethylsilicon-Schaumstabilisator A4-5 | 1,5 |
| Vernetzer A2-2 | 7,0 |
| Treibmittel A3-1 | 6,5 |
| Katalysator A4-6 | 3,0 |

Additive A5 in der Polyolformulierung:

|  | 90 V2 | 90 V3 | 90 C | 90 D | 90 V4 | 90 V5 | 90 E | 90 F |
|---|---|---|---|---|---|---|---|---|
|  | Vergleich | | Erfindungsgemäß | | Vergleich | | Erfindungsgemäß | |
| Typ | $CH_3$-CO-NH-$NH_2$ A5-2 | | NC-$CH_2$-CO-NH-CO-$NH_2$ A5-3 | | DHBH A5-4 | keiner | CMPA A5-5 | KCA A5-6 |
| Gehalt in g/kg | 7,1 | 7,1 | 7,7 | 7,1 | 7,7 | - | 7,7 | 7,7 |
| Gehalt in mmol/kg | 96 | 96 | 61 | 56 | 33 | - | 44 | 63 |
| Zugabe als | Lösung im Treibmittel | Lösung im Vernetzer | Feststoff | Suspension im Vernetzer | flüssig |  | Feststoff | Lösung im Treibmittel |

Der Gehalt ist in Gewichts-% angegeben. DHBH ist das Umsetzungsprodukt aus Hydrazinhydrat und cyclischem Propylencarbonat (1:2 molar). KCA ist Kaliumcyanoacetat $K^+$[NC-$CH_2$-$CO_2$]$^-$. CMPA ist 2-Cyano-N-methyl-N-phenylacetamid NC-$CH_2$-CO-N($CH_3$)($C_6H_5$)
Alle Schaumstoffe werden bei einer Kennzahl von 90 hergestellt.

Mechanische Charakterisierung der Schaumstoffe

| | | 90 V2 | 90 V3 | 90 B | 90 C | 90 V4 | 90 V5 | 90D | 90 E |
|---|---|---|---|---|---|---|---|---|---|
| | | Vergleich | | Erfindungsgemäß | | Vergleich | | Erfindungsgemäß | |
| Dichte | Kg/m$^3$ | 26 | 24 | 24 | 25 | 24 | 21 | 27 | 22 |
| ε | | 6,6% | 6,1% | 7,0% | 7,4% | 5,2% | 5,4% | 5,3% | 3,2% |
| Modul | kPa | 103 | 91 | 112 | 122 | 112 | 94 | 122 | 79 |
| Maximale Kraft | kPa | 82 | 79 | 93 | 101 | 92 | 82 | 124 | |

Die Stauchhärte wurde parallel zur Aufschäumrichtung bei 10% Stauchung gemessen.

Die erfindungsgemäßen Beispiele zeigen eine 20% höhere Härte bei etwas besserer Elastizität im Vergleich zur Nutzung von Acethydrazid. Dies ist bei der Nutzung als Kernlage in Sandwichbauteilen wie Dachhimmeln im Automobil vorteilhaft.

Die Offenzelligkeit wurde mit einem Gasverdrängungspyknometer vom Typ AccuPyc 1330 gemessen.

| | Vergleich | | Erfindungsgemäß | | Vergleich | | Erfindungsgemäß | |
|---|---|---|---|---|---|---|---|---|
| | 90 V2 | 90 V3 | 90 B | 90 C | 90 V4 | 90 V5 | 90 D | 90 E |
| Mittelwert | 88% | 89% | 90% | 92% | 89% | 87% | 88% | 90% |

Die erfindungsgemäßen Beispiele zeigen eine etwas höhere Offenzelligkeit im Vergleich zur Nutzung von Acethydrazid. Dies ist für die Nutzung in schallabsorbierenden Anwendungen vorteilhaft.

Emissionen nach Testmethode 2 (modifizierte Flaschenmethode)

| | | Vergleich | | Erfindungsgemäß | | Vergleich | | Erfindungsgemäß | |
|---|---|---|---|---|---|---|---|---|---|
| | | 90 V2 | 90 V3 | 90 B | 90 C | 90 V4 | 90 V5 | 90 D | 90 E |
| Formaldehyd | mg/kg | 3,7 | 3,6 | 0,7 | 0,3 | 4,8 | 4,4 | 2,2 | 1,3 |
| Abweichung gegen Standard | | -16% | -18% | -84% | -93% | | | -50% | -70% |
| ΔFA/ Additiv | mmol/mol | -7 | -8 | -61 | -73 | | | -49 | -49 |

Die Ergebnisse bestätigen die Literatur: Acethydrazid ist grundsätzlich geeignet ist, die Formaldehydemissionen aus Schaumstoffen zu reduzieren. Cyanoacetylharnstoff und andere Derivate der Cyanessigsäure sind jedoch erheblich wirksamer.

In den Experimenten 90 D und 90 E wurden die Acetaldehydemissionen von 0,6 mg/kg (Vergleich 90V5) auf 0,5 bzw. 0,3 mg/kg gesenkt.

**Versuchsserie 3: halbharter Blockschaum z. B. für Dachhimmel**

(Abgrenzung zu EP2138520)

Beschreibung der Rohstoffe

(A1/A2)-2: Polyether-Gemisch aus einem Glyzerin/Sorbitol-cogestarteten Polyalkylenoxid mit einem Äquivalentgewicht von 1,8 kg/mol und einer OH-Zahl von 31 mg KOH/g, einem Glyzerin-gestarteten Polyalkylenoxid mit einem Äquivalentgewicht von 0,1 kg/mol einer OH-Zahl von 560 mg KOH/g und einem Propylenglycol-gestarteten Polyalkylenoxid mit einem Äquivalentgewicht von 0,2 kg/mol und einer OH-Zahl von 280 mg KOH/g im Gewichtsverhältnis 39:49:12.

A2-2: Glyzerin

A3-1: Wasser

A4-5: Silicon-Schaumstabilisator

A4-6: Reaktionsprodukt aus Ölsäure und Dimethylaminopropylamin (1:1 molar)

A5-3: Cyanacethydrazid

A5-7: Cyanacetamid

B2-2: Gemisch aus MDI Isomeren und Homologen mit einer Dichte von 1,22 kg/Liter, einem Isocyanat-Gehalt von 322 g/kg und einer Viskosität von 0,05 Pa*s. Der Gehalt an 4,4'-MDI beträgt 47 Gew.-%. Die Summe aus 2,2'-MDI, 2,4'-MDI und 4,4'-MDI beträgt 70%.

|  | Gewichts-% in der Polyolformulierung |
| --- | --- |
| Polyether-Gemisch (A1/A2)-2 | 82,75 |
| Silicon-Schaumstabilisator A4-5 | 0,75 |
| Vernetzer A2-2 | 7,00 |
| Treibmittel A3-1 | 6,50 |
| Katalysator A4-6 | 3,00 |

Cyanacetamid ist als Zellöffner bekannt. Von daher war nicht überraschend, dass Schäume, die Cyanacetamid enthielten, instabil waren und in einem Fall kollabierten. Im Falle der Schaumstoffe 80 V2, 90 V6 und 100 V2 wurde der Treibmittelgehalt um 0,5 Gewichtsteile angehoben und es wurden 1,5 Gewichtsteile Jeffcat DPA zugegeben, um eine annähernd vergleichbare Rohdichte zu erhalten.

Einsatzmengen der Additive A5:

In den Vergleichsversuchen 80 V1, 90 V6, 110 V1 und 110 V1 wurde kein Additiv eingesetzt.

|  | 80 V2 | 90 V7 | 110 V2 | 80 A | 90 F | 100 A | 110 A |
| --- | --- | --- | --- | --- | --- | --- | --- |
| Additiv | Cyanacetamid (Vergleich) | | | Cyanacethydrazid (erfindungsgemäß) | | | |
|  | A5-7 | | | A5-3 | | | |
| g/kg Schaumstoff | 8,3 | 7,7 | 7,2 | 8,0 | 7,4 | 6,9 | 6,5 |
| mmol/ kg Schaumstoff | 98 | 92 | 86 | 80 | 75 | 70 | 66 |

Kinetische Charakterisierung der Schaumstoffe

| Startzeit (Sekunden) | | Kennzahl | 80 | 90 | 100 | 110 |
| --- | --- | --- | --- | --- | --- | --- |
|  | | Bezeichnung | 80 V1 | 90 V6 | 100 V1 | 110 V1 |
| Additiv | Keines | Vergleich | 35 | 27 | 25 | 43 |
|  | | Bezeichnung | 80 V2 | 90 V7 | 100 V2 | |
| Additiv | Cyanacetamid | Vergleich | 22 | 24 | 23 | |
|  | | Bezeichnung | 80 A | 90 F | 100 A | 110 A |
| Additiv | Cyanacethydrazid | Erfindung | 22 | 25 | 25 | 28 |
| Abbindezeit (Sekunden) | | Kennzahl | 80 | 90 | 100 | 110 |
|  | | Bezeichnung | 80 V1 | 90 V6 | 100 V1 | 110 V1 |
| Additiv | Keines | Vergleich | 170 | 170 | 175 | 215 |
|  | | Bezeichnung | 80 V2 | | 100 V2 | |
| Additiv | Cyanacetamid | Vergleich | 290 | | 255 | |
|  | | Bezeichnung | 80 A | 90 F | 100 A | 110 A |
| Additiv | Cyanacethydrazid | Erfindung | 180 | 200 | 210 | 225 |

(fortgesetzt)

| Steigzeit (Sekunden) | | Kennzahl | 80 | 90 | 100 | 110 |
|---|---|---|---|---|---|---|
| | | Bezeichnung | 80 V1 | 90 V6 | 100 V1 | 110 V1 |
| Additiv | Keines | Vergleich | 225 | 267 | 285 | 277 |
| | | Bezeichnung | 80 V2 | 90 V7 | 100 V2 | |
| Additiv | Cyanacetamid | Vergleich | 330 | 275 | 300 | |
| | | Bezeichnung | 80 A | 90 F | 100 A | 110 A |
| Additiv | Cyanacethydrazid | Erfindung | 246 | 250 | 255 | 305 |

Der Versuch, Cyanacethydrazid als Additiv einzusetzen, führt bei Kennzahl 100 zum Schaumkollaps. Der Versuch mit Kennzahl 110 wurde nicht durchgeführt.

Mechanische Charakterisierung der Schaumstoffe

| Kernrohdichte in kg/m$^3$ | | Kennzahl | 80 | 90 | 100 | 110 |
|---|---|---|---|---|---|---|
| Vor Alterung | | Bezeichnung | 80 V1 | 90 V6 | 100 V1 | 110 V1 |
| Additiv | Keines | Vergleich | 25 | 28 | 32 | 32 |
| | | Bezeichnung | 80 V2 | 90 V7 | 100 V2 | |
| Additiv | Cyanacetamid | Vergleich | 31 | 31 | Kollabiert | |
| | | Bezeichnung | 80 A | 90 F | 100 A | 110 A |
| Additiv | Cyanacethydrazid | Erfindung | 26 | 30 | 30 | 29 |
| Kernrohdichte in kg/m$^3$ | | Kennzahl | 80 | 90 | 100 | 110 |
| Nach 7 Tagen bei 90°C | | Bezeichnung | 80 V1 | 90 V6 | 100 V1 | 110 V1 |
| Additiv | Keines | Vergleich | 28 | 28 | 29 | 29 |
| | | Bezeichnung | 80 V2 | 90 V7 | 100 V2 | |
| Additiv | Cyanacetamid | Vergleich | 28 | 30 | Kollabiert | |
| | | Bezeichnung | 80 A | 90 F | 100 A | 110 A |
| Additiv | Cyanacethydrazid | Erfindung | 25 | 28 | 28 | 31 |
| Druck-E-Modul in MPa | | Kennzahl | 80 | 90 | 100 | 110 |
| | | Bezeichnung | 80 V1 | 90 V6 | 100 V1 | 110 V1 |
| Additiv | Keines | Vergleich | 0,11 | 0,13 | 0,17 | 0,17 |
| | | Bezeichnung | 80 V2 | 90 V7 | 100 V2 | |
| Additiv | Cyanacetamid | Vergleich | 0,14 | 0,14 | Kollabiert | |
| | | Bezeichnung | 80 A | 90 F | 100 A | 110 A |
| Additiv | Cyanacethydrazid | Erfindung | 0,10 | 0,14 | 0,15 | 0,14 |
| Druck-E-Modul in MPa | | Kennzahl | 80 | 90 | 100 | 110 |
| Nach 7 Tagen bei 90°C | | Bezeichnung | 80 V1 | 90 V6 | 100 V1 | 110 V1 |
| Additiv | Keines | Vergleich | 0,14 | 0,13 | 0,16 | 0,15 |
| | | Bezeichnung | 80 V2 | 90 V7 | 100 V2 | |
| Additiv | Cyanacetamid | Vergleich | 0,12 | 0,15 | Kollabiert | |
| | | Bezeichnung | 80 A | 90 F | 100 A | 110 A |
| Additiv | Cyanacethydrazid | Erfindung | 0,10 | 0,14 | 0,13 | 0,17 |
| Offenzelligkeit in % | | Kennzahl | 80 | 90 | 100 | 110 |
| Gasverdrängungspyknometer AccuPyk 1330 | | Bezeichnung | 80 V1 | 90 V6 | 100 V1 | 110 V1 |
| Additiv | Keines | Vergleich | 47 | 60 | 66 | 69 |
| | | Bezeichnung | 80 V2 | 90 V7 | 100 V2 | |
| Additiv | Cyanacetamid | Vergleich | 81 | 88 | Kollabiert | |
| | | Bezeichnung | 80 A | 90 F | 100 A | 110 A |
| Additiv | Cyanacethydrazid | Erfindung | 60 | 52 | 47 | 43 |
| Glasübergang nach DSC in °C | | Kennzahl | 80 | 90 | 100 | 110 |

**(fortgesetzt)**

| Additiv | | Bezeichnung | 80 V1 | 90 V6 | 100 V1 | 110 V1 |
|---|---|---|---|---|---|---|
| Additiv | Keines | Vergleich | 244 | 204 | 202 | 229 |
| | | Bezeichnung | 80 V2 | 90 V7 | 100 V2 | |
| Additiv | Cyanacetamid | Vergleich | 187 | 173 | Kollabiert | |
| | | Bezeichnung | 80 A | 90 F | 100 A | 110 A |
| Additiv | Cyanacethydrazid | Erfindung | | 240 | 247 | 228 |

**Formaldehydemissionen (alle Angaben in mg / kg Schaumstoff)**

| Vor Alterung | | Kennzahl | 80 | 90 | 100 | 110 |
|---|---|---|---|---|---|---|
| Testmethode 1 | | Bezeichnung | 80 V1 | 90 V6 | 100 V1 | 110 V1 |
| Additiv | Keines | Vergleich | 1,5 | 1,1 | 0,9 | 1,2 |
| | | Bezeichnung | 80 V2 | 90 V7 | 100 V2 | |
| Additiv | Cyanacetamid | Vergleich | 0,4 | 0,3 | kollabiert | |
| | | Bezeichnung | 80 A | 90 F | 100 A | 110 A |
| Additiv | Cyanacethydrazid | Erfindung | 0,2 | 0,5 | 0,3 | 0,2 |
| Nach 7 Tagen bei 90°C | | Kennzahl | 80 | 90 | 100 | 110 |
| Testmethode 1 | | Bezeichnung | 80 V1 | 90 V6 | 100 V1 | 110 V1 |
| Additiv | Keines | Vergleich | 3,6 | 3,2 | 3,4 | 3,2 |
| | | Bezeichnung | 80 V2 | 90 V7 | 100 V2 | 110 V3 |
| Additiv | Cyanacetamid | Vergleich | 1,6 | 2,5 | kollabiert | |
| | | Bezeichnung | 80 A | 90 F | 100 A | 110 A |
| Additiv | Cyanacethydrazid | Erfindung | 0,9 | 0,9 | 1,3 | 1,2 |
| Vor Alterung | | Kennzahl | 80 | 90 | 100 | 110 |
| Testmethode 2 | | Bezeichnung | 80 V1 | 90 V6 | 100 V1 | 110 V1 |
| Additiv | Keines | Vergleich | 4,5 | 6,1 | 6,2 | 6,7 |
| | | Bezeichnung | 80 V2 | 90 V7 | 100 V2 | |
| Additiv | Cyanacetamid | Vergleich | 0,3 | 0,5 | kollabiert | |
| | | Bezeichnung | 80 A | 90 F | 100 A | 110 A |
| Additiv | Cyanacethydrazid | Erfindung | 0,5 | 0,8 | 0,7 | 0,6 |
| Nach 7 Tagen bei 90°C | | Kennzahl | 80 | 90 | 100 | 110 |
| Testmethode 2 | | Bezeichnung | 80 V1 | 90 V6 | 100 V1 | 110 V1 |
| Additiv | Keines | Vergleich | 15,0 | 13,6 | 18,0 | 13,9 |
| | | Bezeichnung | 80 V2 | 90 V7 | 100 V2 | |
| Additiv | Cyanacetamid | Vergleich | 3,2 | 3,9 | kollabiert | |
| | | Bezeichnung | 80 A | 90 F | 100 A | 110 A |
| Additiv | Cyanacethydrazid | Erfindung | 3,0 | 3,0 | 3,0 | 4,3 |

**Formaldehydminderung (alle Angaben in mmol Formaldehyd/mol Additiv)**

| Vor Alterung, Testmethode 1 | | Kennzahl | 80 | 90 | 100 | 110 |
|---|---|---|---|---|---|---|
| | | Bezeichnung | 80 V2 | 90 V7 | 100 V2 | |
| Additiv | Cyanacetamid | Vergleich | 11 | 9 | kollabiert | |
| | | Bezeichnung | 80 A | 90 F | 100 A | 110 A |
| Additiv | Cyanacethydrazid | Erfindung | 16 | 8 | 9 | 15 |
| Nach 7 Tagen bei 90°C | | Kennzahl | 80 | 90 | 100 | 110 |
| Testmethode 1 | | Bezeichnung | 80 V2 | 90 V7 | 100 V2 | 110 V3 |

(fortgesetzt)

| | | | | | | |
|---|---|---|---|---|---|---|
| Additiv | Cyanacetamid | Vergleich | 20 | 8 | kollabiert | |
| | | Bezeichnung | 80 A | 90 F | 100 A | 110 A |
| Additiv | Cyanacethydrazid | Erfindung | 34 | 31 | 30 | 30 |
| Vor Alterung Testmethode 2 | | Kennzahl | 80 | 90 | 100 | 110 |
| | | Bezeichnung | 80 V2 | 90 V7 | 100 V2 | |
| Additiv | Cyanacetamid | Vergleich | 43 | 61 | kollabiert | |
| | | Bezeichnung | 80 A | 90 F | 100 A | 110 A |
| Additiv | Cyanacethydrazid | Erfindung | 50 | 71 | 79 | 92 |
| Nach 7 Tagen bei 90°C | | Kennzahl | 80 | 90 | 100 | 110 |
| Testmethode 2 | | Bezeichnung | 80 V2 | 90 V7 | 100 V2 | |
| Additiv | Cyanacetamid | Vergleich | 120 | 105 | kollabiert | |
| | | Bezeichnung | 80 A | 90 F | 100 A | 110 A |
| Additiv | Cyanacethydrazid | Erfindung | 150 | 141 | 214 | 145 |

Die Ergebnisse bestätigen die Literatur: Cyanacetamid ist geeignet, Formaldehydemissionen zu reduzieren.

Es zeigt sich, dass Cyanacethydrazid nicht nur ebenfalls gut geeignet ist, Formaldehydemissionen zu reduzieren. Dies gilt insbesondere nach Alterung.

Die Nutzung von Cyanacethydrazid erlaubt auch, Schaumstoffe über einen breiteren Kennzahlbereich herzustellen. Dies ist für die industrielle Nutzung von großem Vorteil, weil Schaumstoffe leichter an Kundenbedürfnisse angepaßt werden können.

## Versuchsserie 4: Weichformschaum

(Abgrenzung zu EP2138520).

Beschreibung der Rohstoffe

A1-2: Glyzerin-gestartetes Polyalkylenoxid mit einem Molgewicht von 6,1 kg/mol, einer OH-Zahl von 28 mg KOH/g und einem Gehalt an Ethylenoxid von < 50 Gew.-%.

A2-3: Diethanolamin

A3-1: Wasser

A4-2: Schaumstabilisator Tegostab® B8734 LF2, Handelsprodukt der Firma Evonik Nutrition & Care, Essen

A4-3: Glyzerin-gestartetes Polyalkylenoxid mit einer OH-Zahl von 37 mg KOH/g und einem Gehalt an Ethylenoxid von $\geq$ 50 Gew.-% (Zellöffner)

A4-7: Katalysator-Mischung aus Jeffcat® ZR50 (Handelsprodukt der Firma Huntsman) und Dabco® NE 300 (Handelsprodukt der Firma Air Products) im Verhältnis 4:1 (nach Gewicht)

A5-3: Cyanacethydrazid

A5-7: Cyanacetamid

B1-3: Gemisch aus MDI Isomeren und Homologen mit einer Dichte von 1,24 kg/Liter, einem Isocyanat-Gehalt von 325 g/kg und einer Viskosität von 0,03 Pa*s. Der Gehalt an 4,4'-MDI beträgt 60 Gew.-%. Die Summe aus 2,2'-MDI, 2,4'-MDI und 4,4'-MDI beträgt 83 Gew.-%.

| | Vergleich | Vergleich | Erfindungsgemäß | |
|---|---|---|---|---|
| | 90V8 | 90V9 | 90G | |
| Polyether A1-2 | 931 | 931 | 945 | g/kg |
| Zellöffner A4-3 | 19 | 19 | 19 | g/kg |
| Vernetzer A2-3 | 11 | 11 | 11 | g/kg |
| Treibmittel A3-1 | 33 | 33 | 33 | g/kg |

(fortgesetzt)

|  | Vergleich | Vergleich | Erfindungsgemäß |  |
|---|---|---|---|---|
|  | 90V8 | 90V9 | 90G |  |
| Katalysator A4-7 | 5 | 5 | 5 | g/kg |
| Cyanessigsäureamid A5-7 | 0 | 1 | 0 | g/kg |
| Cyanessigsäurehydrazid A5-3 | 0 | 0 | 1 | g/kg |

Die beiden Komponenten A und B wurden mit einer Kennzahl von 100 zur Reaktion gebracht.

Die Einsatzmengen an Cyanacetamid A5-7 und Cyanacethydrazid A5-3 betragen 7,1 bzw. 6,0 mmol/kg Schaumstoff.

In für die Herstellung von Polyurethan-Weichformschaumstoffen im Kaltschaumschaumverfahren üblicher Verarbeitungsweise nach dem Einstufenverfahren werden die in den Beispielen aufgeführten Einsatzstoffe miteinander zur Reaktion gebracht. Das 24°C warme Reaktionsgemisch wird in eine auf 60°C geheizte und vorher mit einem Trennmittel (PURA E1429H NV (Chem-Trend)) bestrichene Metallform (9,7 dm$^3$ Volumen) eingebracht. Die Einsatzmenge wird entsprechend der angestrebten Rohdichte und Formenvolumen verwendet. Die Formteile wurden nach 4 Minuten entformt und aufgedrückt. Die Formteile wurden nach 4 Stunden in AluminiumVerbundfolie versiegelt.

Die Formaldehydemissionen wurden nach Methode 2 bestimmt.

|  | 90V8 | 90V9 | 90G |  |
|---|---|---|---|---|
|  | Vergleich | Vergleich | Erfindungsgemäß |  |
| Formaldehyd | 3,0 | 1,8 | 1,5 | mg/kg |
| Differenz zum Schaustoff ohne Additiv | Referenz | 1,2 | 1,5 | mg/kg |
| Spezifische Reduktion | Referenz | 5,6 | 8,3 | mmol/mol |

Die Acetaldehydemissionen betragen 0,6 mg/kg ohne Additiv. Beide Additive drücken die Acetaldehydemissionen unter die Nachweisgrenze von 0,3 mg/kg.

Auch hier zeigt sich, daß Cyanessigsäureamid geeignet ist, die Emissionen von Formaldehyd zu reduzieren.

Auch hier wirkt Cyanessigsäurehydrazid noch besser.

**Patentansprüche**

1. Verfahren zur Herstellung von Polyurethanen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.

2. Verfahren zur Herstellung von Polyurethanen, bevorzugt Polyurethanschaumstoffen, bei dem

A1 gegenüber Isocyanaten reaktionsfähige Wasserstoffatome aufweisende Verbindungen mit einer OH-Zahl gemäß DIN 53240 von $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 von $\geq$ 260 bis < 4000 mg KOH/g,

A3 Wasser und/oder physikalische Treibmittel,

A4 ggf. Hilfs- und Zusatzstoffe wie

    a) Katalysatoren,
    b) oberflächenaktive Zusatzstoffe,
    c) Pigmente und/oder Flammschutzmittel

A5 eine oder mehrere Verbindungen ausgewählt aus der Gruppe bestehend aus:

$$NC\text{-}CHR^1\text{-}CON\ R^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

    - X für $NR^6R^7$,
    - $R^1$, $R^4$, $R^5$, $R^6$, $R^7$ und $R^{12}$ jeweils unabhängig voneinander für H, eine gegebenenfalls substituierte $C_1\text{-}C_8$ Alkylgruppe oder eine gegebenenfalls substituierte Arylgruppe,
    - Y für ein ein- oder zweiwertiges Kation, und
    - m für 1 oder 2 stehen,
    und

B Di- und/oder Polyisocyanate
miteinander umgesetzt werden.

3.   Verfahren gemäß Anspruch 1 oder 2, wobei

    - die Einsatzmenge der Verbindungen (I), (III) und (IV), bezogen auf 1 kg der gegenüber Isocyanaten reaktionsfähigen Wasserstoffatomen aufweisenden Verbindungen und der Di-und/oder Polyisocyanate 1 bis 100 g, bevorzugt 5 bis 50 g beträgt (Anspruch 1), bzw. die Einsatzmenge der Komponente A5, bezogen auf 1 kg der Komponenten A1 und B, 1 bis 100 g, bevorzugt 5 bis 50 g beträgt (Anspruch 2).

4.   Verfahren zur Herstellung von Polyurethanen, bevorzugt Polyurethanschaumstoffen gemäß Anspruch 2 oder 3 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

A5 1 bis 100 g pro kg der Komponenten A1 und B, bevorzugt 5 bis 50 g pro kg der Komponenten A1 und B einer oder mehrerer Verbindungen ausgewählt aus der Gruppe bestehend aus:

$$NC\text{-}CHR^1\text{-}CON\ R^{12}\text{-}X \qquad (I),$$

$$NC-CHR^4-CO_2H \qquad (III),$$

$$[NC-CHR^5-CO_2]_mY^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,
und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

5. Verfahren zur Herstellung von Polyurethanen, bevorzugt Polyurethanschaumstoffen gemäß Anspruch 2 oder 3 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 260 mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,
A3 0,5 bis 25 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^4-CO_2H \qquad (III),$$

$$[NC-CHR^5-CO_2]_mY^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,
und

B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

6. Verwendung einer oder mehrerer Verbindungen ausgewählt aus der Gruppe bestehend aus:

$$NC\text{-}CHR^1\text{-}CON\ R^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$,
- $R^1$, $R^4$, $R^5$, $R^6$, $R^7$ und $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

in Polyurethanzusammensetzungen oder in Verfahren zur Herstellung von Polyurethanen, bevorzugt Polyurethanschaumstoffen, zur Erniedrigung der Formaldehydemission der daraus resultierenden Polyurethane, bzw. Polyurethanschaumstoffe.

7. Verfahren oder Verwendung gemäß einem der Ansprüche 1 bis 6, wobei in den Verbindungen (I) bis (IV) $R^1$, $R^4$, $R^5$, $R^6$, $R^7$ und $R^{12}$ jeweils unabhängig voneinander für H oder eine $C_1$-$C_6$ Alkylgruppe stehen.

8. Verfahren oder Verwendung gemäß Anspruch 7, wobei R1, R4 und R5 unabhängig voneinander für H stehen.

9. Verfahren gemäß einem der Ansprüche 1 bis 5, 7 oder 8, wobei als gegenüber Isocyanaten reaktionsfähige Wasserstoffatome aufweisenden Verbindungen (Komponente A1) mindestens zwei Hydroxylgruppen aufweisenden Polyether, gegebenenfalls in Mischung mit mindestens zwei Hydroxylgruppen aufweisenden Polyestern eingesetzt werden.

10. Verfahren gemäß einem der Ansprüche 1 bis 5, 7 bis 9, wobei die Komponente, die aus gegenüber Isocyanaten reaktionsfähige Wasserstoffatome aufweisenden Verbindungen besteht (Komponente A1), mindestens 30 Gew.-% mindestens eines Polyoxyalkylen-Copolymers enthält, bestehend aus einem Starter, Propylenoxid und Ethylenoxid und einem Endblock aus Ethylenoxid, wobei das Gesamtgewicht der Endblöcke aus Ethylenoxid im Mittel 3 - 20 Gew.-%, bevorzugt 5-15, besonders bevorzugt 6 - 10 Gew.-% bezogen auf das gesamte Gewicht aller Polyoxyalkylen-Copolymere beträgt.

11. Verfahren gemäß einem der Ansprüche 1 bis 5 oder 7 bis 10, wobei als Di- und/oder Polyisocyanat-Komponente (Komponente B) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,
verwendet wird.

12. Verfahren gemäß einem der Ansprüche 1 bis 5 oder 7 bis 10, wobei als Di- und/oder Polyisocyanat-Komponente (Komponente B) eine Diphenylmethandiisocyanat-Mischung, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,
verwendet wird.

13. Polyurethane, bzw. Polyurethanschaumstoffe erhältlich nach einem Verfahren gemäß einem der Ansprüche 1 bis 5 oder 7 bis 12.

**14.** Polyurethane, bzw. Polyurethanschaumstoffe gemäß Anspruch 13 mit einem Raumgewicht von 4 bis 600 kg/m$^3$ (Polyurethanweichschaum bzw. Halbhartschaum), bevorzugt 60 bis 120 kg/m$^3$ (Polyurethanweichschaum), bzw. bevorzugt 15 bis 55 kg/m$^3$ (Halbhartschaum).

**15.** Verwendung der Polyurethane, bzw. Polyurethanschaumstoffe gemäß Anspruch 13 oder 14 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**Claims**

**1.** Process for producing polyurethanes by reaction of compounds containing isocyanate-reactive hydrogen atoms with di- and/or polyisocyanates in the presence of one or more compounds selected from the group consisting of:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wherein

- X represents $NR^6R^7$,
- $R^1$, $R^4$, $R^5$, $R^6$, $R^7$ and $R^{12}$ each independently of one another represent H, an optionally substituted $C_1$-$C_8$ alkyl group or an optionally substituted aryl group,
- Y represents a monovalent or divalent cation and
- m represents 1 or 2.

**2.** Process for producing polyurethanes, preferably polyurethane foams, which comprises reacting with one another

A1 compounds containing isocyanate-reactive hydrogen atoms having an OH number according to DIN 53240 of $\geq$ 15 to < 260 mg KOH/g,
A2 optionally compounds containing isocyanate-reactive hydrogen atoms having an OH number according to DIN 53240 of $\geq$ 260 to < 4000 mg KOH/g,
A3 water and/or physical blowing agents,
A4 optionally auxiliary and additive substances such as

a) catalysts,
b) surface-active additive substances,
c) pigments and/or flame retardants,

A5 one or more compounds selected from the group consisting of:

$$NC-CHR^1-CONR^{12}-X \qquad (I),$$

$$NC-CHR^4-CO_2H \qquad (III),$$

$$[NC-CHR^5-CO_2]_m Y^{m+} \qquad (IV),$$

wherein

- X represents $NR^6R^7$,
- $R^1$, $R^4$, $R^5$, $R^6$, $R^7$ and $R^{12}$ each independently of one another represent H, an optionally substituted $C_1$-$C_8$ alkyl group or an optionally substituted aryl group,
- Y represents a monovalent or divalent cation and
- m represents 1 or 2,
and
B di- and/or polyisocyanates.

3. Process according to Claim 1 or 2, wherein

   - the usage amount of the compounds (I), (III) and (IV) based on 1 kg of the compounds containing isocyanate-reactive hydrogen atoms and the di-and/or polyisocyanates is 1 to 100 g, preferably 5 to 50 g (Claim 1), and the usage amount of the component A5 based on 1 kg of the components A1 and B is 1 to 100 g, preferably 5 to 50 g (Claim 2).

4. Process for producing polyurethanes, preferably polyurethane foams, according to Claim 2 or 3 which comprises reacting with one another

   A1 75 to 99.0 parts by weight (based on the sum of the parts by weight of components A1 to A4) of compounds containing isocyanate-reactive hydrogen atoms having an OH number according to DIN 53240 of $\geq 15$ to <260 mg KOH/g,
   A2 0 to 10 parts by weight (based on the sum of the parts by weight of components A1 to A4) of compounds containing isocyanate-reactive hydrogen atoms having an OH number according to DIN 53240 of $\geq 260$ to < 4000 mg KOH/g,
   A3 0.5 to 24.5 parts by weight (based on the sum of the parts by weight of components A1 to A4) of water and/or physical blowing agents,
   A4 0.5 to 10 parts by weight (based on the sum of the parts by weight of components A1 to A4) of auxiliary and additive substances such as

   a) catalysts,
   b) surface-active additive substances,
   c) pigments and/or flame retardants,

   A5 1 to 100 g per kg of the components A1 and B, preferably 5 to 50 g per kg of the components A1 and B, of one or more compounds selected from the group consisting of:

   $$NC\text{-}CHR^1\text{-}CONR^{12}\text{-}X \qquad (I),$$

   $$NC\text{-}CHR^4\text{-}CO_2H \qquad (III),$$

   $$[NC\text{-}CHR^5\text{-}CO_2]_mY^{m+} \qquad (IV),$$

   wherein

   - X represents $NR^6R^7$,
   - $R^1$, $R^4$, $R^5$, $R^6$, $R^7$ and $R^{12}$ each independently of one another represent H, an optionally substituted $C_1$-$C_8$ alkyl group or an optionally substituted aryl group,
   - Y represents a monovalent or divalent cation and
   - m represents 1 or 2,
   and
   B di- or polyisocyanates,
   wherein all reported parts by weight for the components A1 to A4 are normalized such that the sum of the parts by weight of the components A1+A2+A3+A4 in the composition adds up to 100.

5. Process for producing polyurethanes, preferably polyurethane foams, according to Claim 2 or 3 which comprises reacting with one another

   A1 25 to 45 parts by weight (based on the sum of the parts by weight of components A1 to A4) of compounds containing isocyanate-reactive hydrogen atoms having an OH number according to DIN 53240 of $\geq 15$ to < 260 mg KOH/g,
   A2 20 to 74 parts by weight (based on the sum of the parts by weight of components A1 to A4) of compounds containing isocyanate-reactive hydrogen atoms having an OH number according to DIN 53240 of $\geq 260$ to < 4000 mg KOH/g,
   A3 0.5 to 25 parts by weight (based on the sum of the parts by weight of components A1 to A4) of water and/or physical blowing agents,
   A4 0.5 to 10 parts by weight (based on the sum of the parts by weight of components A1 to A4) of auxiliary and additive substances such as

a) catalysts,
b) surface-active additive substances,
c) pigments and/or flame retardants,

A5 1 to 100 g per kg of the components A1 and B, preferably 5 to 50 g per kg of the components A1 and B (sum of A1 and B), of one or more compounds selected from the group consisting of:

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wherein

- X represents $NR^6R^7$,
- $R^1$, $R^4$, $R^5$, $R^6$, $R^7$ and $R^{12}$ each independently of one another represent H, an optionally substituted $C_1$-$C_8$ alkyl group or an optionally substituted aryl group,
- Y represents a monovalent or divalent cation and
- m represents 1 or 2,
and
B di- or polyisocyanates,
wherein all reported parts by weight for the components A1 to A4 are normalized such that the sum of the parts by weight of the components A1+A2+A3+A4 in the composition adds up to 100.

6.  Use of one or more compounds selected from the group consisting of:

$$NC\text{-}CHR^1\text{-}CON\ R^{12}\text{-}X \qquad (I),$$

$$NC\text{-}CHR^4\text{-}CO_2H \qquad (III),$$

$$[NC\text{-}CHR^5\text{-}CO_2]_m Y^{m+} \qquad (IV),$$

wherein

- X represents $NR^6R^7$,
- $R^1$, $R^4$, $R^5$, $R^6$, $R^7$ and $R^{12}$ each independently of one another represent H, an optionally substituted $C_1$-$C_8$ alkyl group or an optionally substituted aryl group,
- Y represents a monovalent or divalent cation and
- m represents 1 or 2,

in polyurethane compositions or in processes for producing polyurethanes, preferably polyurethane foams, for reducing the formaldehyde emissions of the polyurethanes/polyurethane foams resulting therefrom.

7.  Process or use according to any of Claims 1 to 6, wherein in the compounds (I) to (IV) $R^1$, $R^4$, $R^5$, $R^6$, $R^7$ and $R^{12}$ each independently of one another represent H or a $C_1$-$C_6$ alkyl group.

8.  Process or use according to Claim 7, wherein R1, R4 and R5 independently of one another represent H.

9.  Process according to any of Claims 1 to 5, 7 or 8, wherein as the compounds containing isocyanate-reactive hydrogen atoms (component A1) at least two hydroxyl-containing polyethers, optionally in admixture with at least two hydroxyl-containing polyesters, are employed.

10. Process according to any of Claims 1 to 5, 7 to 9, wherein the component consisting of compounds containing isocyanate-reactive hydrogen atoms (component A1) contains at least 30% by weight of at least one polyoxyalkylene copolymer consisting of a starter, propylene oxide and ethylene oxide and an end block made of ethylene oxide, wherein the total weight of the end blocks made of ethylene oxide is on average 3-20% by weight, preferably 5-15% by weight, particularly preferably 6-10% by weight, based on the total weight of all polyoxyalkylene copolymers.

11. Process according to any of Claims 1 to 5 or 7 to 10, wherein as the di- and/or polyisocyanate component (component B) a diphenylmethane diisocyanate mixture consisting of

   a) 45% to 90% by weight of 4,4'-diphenylmethane diisocyanate and
   b) 10% to 55% by weight of 2,2'-diphenylmethane diisocyanate and/or 2,4'-diphenylmethane diisocyanate and
   c) 0% to 45% by weight of polyphenylpolymethylene polyisocyanate ("polycyclic MDI") and/or 2,2'-, 2,4'-, 4,4'-diphenylmethane diisocyanate-based and/or pMDI-based carbodiimides, uretdiones or uretdioneimines
   is employed.

12. Process according to any of Claims 1 to 5 or 7 to 10, wherein as the di- and/or polyisocyanate component (component B) a diphenylmethane diisocyanate mixture consisting of

   a) 35% to 45% by weight of 4,4'-diphenylmethane diisocyanate and
   b) 1% to 5% by weight of 2,2'-diphenylmethane diisocyanate and/or 2,4'-diphenylmethane diisocyanate and
   c) 50% to 64% by weight of polyphenylpolymethylene polyisocyanate ("polycyclic MDI") and/or 2,2'-, 2,4'-, 4,4'-diphenylmethane diisocyanate-based and/or pMDI-based carbodiimides, uretdiones or uretdioneimines
   is employed.

13. Polyurethanes/polyurethane foams obtainable by a process according to any of Claims 1 to 5 or 7 to 12.

14. Polyurethanes/polyurethane foams according to Claim 13 having a density of 4 to 600 kg/m$^3$ (flexible polyurethane foam/semi-flexible foam), preferably 60 to 120 kg/m$^3$ (flexible polyurethane foam) and preferably 15 to 55 kg/m$^3$ (semi-flexible foam).

15. Use of the polyurethanes/polyurethane foams according to Claim 13 or 14 for producing furniture cushioning, textile inlays, mattresses, automotive seats, headrests, armrests, sponges, headlinings, door trims, seat covers or constructional elements.


**Revendications**

1. Procédé pour la préparation de polyuréthanes par transformation de composés, présentant des atomes d'hydrogène capables de réagir avec des isocyanates, avec des diisocyanates et/ou des polyisocyanates en présence d'un ou plusieurs composés choisis dans le groupe constitué par :

   $$NC\text{-}CHR^1\text{-}CONR^{12}\text{-}X \qquad \textbf{(I),}$$

   $$\textbf{NC-CHR}^4\textbf{-CO}_2\textbf{H} \qquad (III),$$

   $$[NC\text{-}CHR^5\text{-}CO_2]_m Y^{m+} \qquad \textbf{(IV),}$$

   - X représentant $NR^6R^7$,
   - $R^1$, $R^4$, $R^5$, $R^6$, $R^7$ et $R^{12}$ représentant à chaque fois indépendamment les uns des autres H, un groupe $C_{1-8}$ alkyle éventuellement substitué ou un groupe aryle éventuellement substitué,
   - Y représentant un cation monovalent ou divalent, et
   - m représentant 1 ou 2.

2. Procédé pour la préparation de polyuréthanes, préférablement de mousses de polyuréthane, dans lequel

   A1 des composés présentant des atomes d'hydrogène capables de réagir avec des isocyanates, dotés d'un indice d'OH selon la norme DIN 53240 de ≥ 15 à < 260 mg de KOH/g,
   A2 éventuellement des composés présentant des atomes d'hydrogène capables de réagir avec des isocyanates, dotés d'un indice d'OH selon la norme DIN 53240 de ≥ 260 à < 4 000 mg de KOH/g,
   A3 de l'eau et/ou des agents gonflants physiques,
   A4 éventuellement des auxiliaires et des additifs comme

a) des catalyseurs,
b) des additifs tensioactifs,
c) des pigments et/ou des agents ignifugeants

A5 un ou plusieurs composés choisis dans le groupe constitué par :

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_mY^{m+} \qquad (IV),$$

- X représentant $NR^6R^7$,
- $R^1$, $R^4$, $R^5$, $R^6$, $R^7$ et $R^{12}$ représentant à chaque fois indépendamment les uns des autres H, un groupe $C_{1-8}$ alkyle éventuellement substitué ou un groupe aryle éventuellement substitué,
- Y représentant un cation monovalent ou divalent, et
- m représentant 1 ou 2
et
B des diisocyanates et/ou des polyisocyanates sont transformés les uns avec les autres.

**3.** Procédé selon la revendication 1 ou 2,

- la quantité de départ des composés (I), (III) et (IV), par rapport à 1 kg des diisocyanates et/ou des polyisocyanates et des composés présentant des atomes d'hydrogène capables de réagir avec des isocyanates, étant de 1 à 100 g, préférablement 5 à 50 g (revendication 1), ou la quantité de départ du composant A5, par rapport à 1 kg des composants A1 et B, étant de 1 à 100 g, préférablement 5 à 50 g (revendication 2).

**4.** Procédé pour la préparation de polyuréthanes, préférablement de mousses de polyuréthane selon la revendication 2 ou 3 dans lequel

A1 75 à 99,0 parties en poids (par rapport à la somme des parties en poids des composants A1 à A4) de composés présentant des atomes d'hydrogène capables de réagir avec des isocyanates, dotés d'un indice d'OH selon la norme DIN 53240 de $\geq$ 15 à < 260 mg de KOH/g,
A2 0 à 10 parties en poids (par rapport à la somme des parties en poids des composants A1 à A4) de composés présentant des atomes d'hydrogène capables de réagir avec des isocyanates, dotés d'un indice d'OH selon la norme DIN 53240 de $\geq$ 260 à < 4 000 mg de KOH/g,
A3 0,5 à 24,5 parties en poids (par rapport à la somme des parties en poids des composants A1 à A4) d'eau et/ou d'agents gonflants physiques,
A4 0,5 à 10 parties en poids (par rapport à la somme des parties en poids des composants A1 à A4) d'auxiliaires et d'additifs comme

a) des catalyseurs,
b) des additifs tensioactifs,
c) des pigments et/ou des agents ignifugeants

A5 1 à 100 g par kg des composants A1 et B, préférablement 5 à 50 g par kg des composants A1 et B d'un ou plusieurs composés choisis dans le groupe constitué par :

$$NC\text{-}CHR^1\text{-}CONR^{12}\text{-}X \qquad (I),$$

$$NC\text{-}CHR^4\text{-}CO_2H \qquad (III),$$

$$[NC\text{-}CHR^5\text{-}CO_2]_mY^{m+} \qquad (IV),$$

- X représentant $NR^6R^7$,
- $R^1$, $R^4$, $R^5$, $R^6$, $R^7$ et $R^{12}$ représentant à chaque fois indépendamment les uns des autres H, un groupe

$C_{1-8}$ alkyle éventuellement substitué ou un groupe aryle éventuellement substitué,
- Y représentant un cation monovalent ou divalent, et
- m représentant 1 ou 2
et
B des diisocyanates et/ou des polyisocyanates sont transformés les uns avec les autres,
toutes les données de parties en poids des composants A1 à A4 étant normées de telle manière que la somme des parties en poids des composants A1 + A2 + A3 + A4 dans la composition donne 100.

5. Procédé pour la préparation de polyuréthanes, préférablement de mousses de polyuréthane selon la revendication 2 ou 3 dans lequel

A1 25 à 45 parties en poids (par rapport à la somme des parties en poids des composants A1 à A4) de composés présentant des atomes d'hydrogène capables de réagir avec des isocyanates, dotés d'un indice d'OH selon la norme DIN 53240 de $\geq$ 15 à < 260 mg de KOH/g,
A2 20 à 74 parties en poids (par rapport à la somme des parties en poids des composants A1 à A4) de composés présentant des atomes d'hydrogène capables de réagir avec des isocyanates, dotés d'un indice d'OH selon la norme DIN 53240 de $\geq$ 260 à < 4 000 mg de KOH/g,
A3 0,5 à 25 parties en poids (par rapport à la somme des parties en poids des composants A1 à A4) d'eau et/ou d'agents gonflants physiques,
A4 0,5 à 10 parties en poids (par rapport à la somme des parties en poids des composants A1 à A4) d'auxiliaires et d'additifs comme

a) des catalyseurs,
b) des additifs tensioactifs,
c) des pigments et/ou des agents ignifugeants

A5 1 à 100 g par kg des composants A1 et B, préférablement 5 à 50 g par kg des composants A1 et B (somme de A1 et B) d'un ou plusieurs composés choisis dans le groupe constitué par :

$$\text{NC-CHR}^1\text{-CONR}^{12}\text{-X} \qquad \text{(I),}$$

$$\text{NC-CHR}^4\text{-CO}_2\text{H} \qquad \text{(III),}$$

$$[\text{NC-CHR}^5\text{-CO}_2]_m\text{Y}^{m+} \qquad \text{(IV),}$$

- X représentant $NR^6R^7$,
- $R^1$, $R^4$, $R^5$, $R^6$, $R^7$ et $R^{12}$ représentant à chaque fois indépendamment les uns des autres H, un groupe $C_{1-8}$ alkyle éventuellement substitué ou un groupe aryle éventuellement substitué,
- Y représentant un cation monovalent ou divalent, et
- m représentant 1 ou 2
et
B des diisocyanates et/ou des polyisocyanates sont transformés les uns avec les autres,
toutes les données de parties en poids des composants A1 à A4 étant normées de telle manière que la somme des parties en poids des composants A1 + A2 + A3 + A4 dans la composition donne 100.

6. Utilisation d'un ou plusieurs composés choisis dans le groupe constitué par :

$$\text{NC-CHR}^1\text{-CONR}^{12}\text{-X} \qquad \text{(I),}$$

$$\text{NC-CHR}^4\text{-CO}_2\text{H} \qquad \text{(III),}$$

$$[\text{NC-CHR}^5\text{-CO}_2]_m\text{Y}^{m+} \qquad \text{(IV),}$$

- X représentant $NR^6R^7$,
- $R^1$, $R^4$, $R^5$, $R^6$, $R^7$ et $R^{12}$ représentant à chaque fois indépendamment les uns des autres H, un groupe $C_{1-8}$ alkyle éventuellement substitué ou un groupe aryle éventuellement substitué,
- Y représentant un cation monovalent ou divalent, et

- m représentant 1 ou 2

dans des compositions de polyuréthane ou dans un procédé pour la préparation de polyuréthanes, préférablement de mousses de polyuréthane, pour l'abaissement de l'émission de formaldéhyde des polyuréthanes ou des mousses de polyuréthane résultant(e)s.

7. Procédé ou utilisation selon l'une quelconque des revendications 1 à 6, dans lequel dans les composés (I) à (IV), $R^1$, $R^4$, $R^5$, $R^6$, $R^7$ et $R^{12}$ représentent à chaque fois indépendamment les uns des autres H ou un groupe $C_{1-6}$ alkyle.

8. Procédé ou utilisation selon la revendication 7, R1, R4 et R5 représentant indépendamment les uns des autres H.

9. Procédé selon l'une quelconque des revendications 1 à 5, 7 ou 8, des polyéthers présentant au moins deux groupes hydroxyle, éventuellement en mélange avec des polyesters présentant au moins deux groupes hydroxyle, étant utilisés en tant que composés présentant des atomes d'hydrogène capables de réagir avec des isocyanates (composant A1).

10. Procédé selon l'une quelconque des revendications 1 à 5, 7 à 9, le composant, qui est constitué de composés présentant des atomes d'hydrogène capables de réagir avec des isocyanates (composant A1), contenant au moins 30 % en poids d'au moins un copolymère de polyoxyalkylène, constitué d'un amorceur, d'oxyde de propylène et d'oxyde d'éthylène et d'un bloc terminal de type oxyde d'éthylène, le poids total des blocs terminaux de type oxyde d'éthylène étant en moyenne de 3 à 20 % en poids, préférablement 5 à 15, particulièrement préférablement 6 à 10 % en poids par rapport au poids total de tous les copolymères de polyoxyalkylène.

11. Procédé selon l'une quelconque des revendications 1 à 5 ou 7 à 10, un mélange de diisocyanates de diphénylméthane constitué de

a) 45 à 90 % en poids de 4,4'-diisocyanate diphénylméthane et
b) 10 à 55 % en poids de 2,2'-diisocyanate diphénylméthane et/ou de 2,4'-diisocyanate diphénylméthane et
c) 0 à 45 % en poids d'un polyisocyanate de polyphénylpolyméthylène (« MDI à plusieurs noyaux ») et/ou de carbodiimides, d'uretdiones ou d'uretdionimines à base de 2,2'-diisocyanate diphénylméthane, de 2,4'-diisocyanate diphénylméthane, de 4,4'-diisocyanate diphénylméthane et/ou de pMDI

étant utilisé en tant que composant de type diisocyanate et/ou polyisocyanate (composant B).

12. Procédé selon l'une quelconque des revendications 1 à 5 ou 7 à 10, un mélange de diisocyanates de diphénylméthane constitué de

a) 35 à 45 % en poids de 4,4'-diisocyanate diphénylméthane et
b) 1 à 5 % en poids de 2,2'-diisocyanate diphénylméthane et/ou de 2,4'-diisocyanate diphénylméthane et
c) 50 à 64 % en poids d'un polyisocyanate de polyphénylpolyméthylène (« MDI à plusieurs noyaux ») et/ou de carbodiimides, d'uretdiones ou d'uretdionimines à base de 2,2'-diisocyanate diphénylméthane, de 2,4'-diisocyanate diphénylméthane, de 4,4'-diisocyanate diphénylméthane et/ou de pMDI

étant utilisé en tant que composant de type diisocyanate et/ou polyisocyanate (composant B).

13. Polyuréthanes ou mousses de polyuréthane pouvant être obtenu(e)s par un procédé selon l'une quelconque des revendications 1 à 5 ou 7 à 12.

14. Polyuréthanes ou mousses de polyuréthane selon la revendication 13 doté(e)s d'un poids volumique de 4 à 600 kg/m³ (mousse souple ou mousse semi-dure de polyuréthane), préférablement de 60 à 120 kg/m³ (mousse souple de polyuréthane), ou préférablement de 15 à 55 kg/m³ (mousse semi-dure).

15. Utilisation des polyuréthanes ou des mousses de polyuréthane selon la revendication 13 ou 14 pour la fabrication de rembourrages de meubles, de carcasses textiles, de matelas, de sièges d'automobiles, d'appuie-têtes, d'accoudoirs, de mousses, de pavillons, d'habillages de porte latérale, des couvre-sièges ou de composants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2138520 A
- WO 2015082316 A
- EP 1674515 A
- DE 1694142 A
- DE 1694215 A
- DE 1720768 A
- EP 0007502 A
- US 1922451 A
- US 674619 A2
- US 1922459 A
- US 3190927 A
- US 3346557 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 2046861 A
- US 4089835 A
- US 4260530 A
- GB 2072204 A
- DE 3103757 A1
- US 4374209 A
- EP 0000389 A
- EP 0176013 A
- EP 355000 A

**In der Beschreibung aufgeführte Nicht-Patentliteratur**

- Polyurethane. Kunststoff-Handbuch. Carl Hanser Verlag, 1966, vol. VII
- Neuauflage dieses Buches. Carl Hanser Verlag, 1993
- Reaction Polymers. Kunststoffhandbuch, Band 7, Polyurethane. vol. 7
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1993, vol. VII, 139-265